# EUROPEAN PATENT APPLICATION

(11) **EP 4 620 586 A1**
(43) Date of publication of application: **24.09.2025**
(21) Application number: 23891277.8
(22) Date of filing: 18.10.2023
(51) Int. Cl.: B21B 27/08, F16C 13/00, H01M 4/04

(54) **COMPRESSION DEVICE**

(30) Priority: 18.11.2022 JP 2022184701
(71) Applicant: Panasonic Energy Co., Ltd., Osaka 570-8511 (JP)
(72) Inventor: TERASAWA, Fumihiro, Kadoma-shi, Osaka 571-0057 (JP)
(74) Representative: Novagraaf International SA
(86) International application number: PCT/JP2023/037688
(87) International publication number: WO 2024/106121

(57) **Abstract**

A compression apparatus 10 disclosed includes: a compression roll 20 in which a heat transfer fluid flow path is formed and that compresses an electrode plate 100 for battery use; and a temperature control device 40 that is connected to the heat transfer fluid flow path via a pipe 50 and that controls the temperature of the compression roll 20 by allowing the heat transfer fluid whose temperature has been adjusted to flow through the heat transfer fluid flow path. The temperature control device 40 is configured to adjust the temperature of the heat transfer fluid such that a difference between the temperature of the compression roll 20 and an electrode plate temperature, which is a temperature of the electrode plate 100 immediately after compression by the compression roll 20, is less than or equal to a first threshold value. As a result, generation of thermal crowns can be suppressed.

## Description

### [Technical Field]

The present disclosure relates to a compression apparatus.

### [Background Art]

Conventionally, a compression apparatus for compressing an electrode plate for battery use has been known (e.g., Patent Literature 1). The compression apparatus of Patent Literature 1 includes a compression roll for compressing the electrode plate, a plurality of bearings for supporting both ends of the compression roll, a lubricating oil temperature adjusting means for adjusting the temperature of a lubricating oil supplied to each bearing, a plurality of temperature sensors for detecting the surface temperatures of the central portion and both ends of the compression roll, and a control means for controlling the lubricating oil temperature adjusting means based on the detection values of the plurality of temperature sensors. Here, the control means controls the lubricating oil temperature control means such that the surface temperature of the central portion of the compression roll and the surface temperature of both ends of the compression roll match each other.

### [Citation List]

### [Patent Literature]

Patent Literature 1: Japanese Laid-Open Patent Publication No. 2022-41417

### [Summary of Invention]

### [Technical Problem]

However, in the compression apparatus of Patent Literature 1, there is a risk of generating thermal crowns, a phenomenon where the temperature distribution within the compression roll changes its shape, causing its surface to rise and fall. This is because a gradient of the internal temperature may be caused within the compression roll although the surface temperature of the compression roll may be even over the entire length according to the control method described above. For example, when the internal temperature of the central portion of the compression roll is higher than those of both ends of the compression roll even though the surface temperature thereof is equal to the surface temperatures of both ends, thermal expansion at the central portion of the compression roll is relatively large, generating a thermal crown that makes the central portion protrude. When such a thermal crown is generated, the thickness of the electrode plate after compression becomes uneven. To address such a situation, the present disclosure has its object of suppressing generation of thermal crowns.

### [Solution to Problem]

One aspect of the present disclosure relates to a compression apparatus. The compression apparatus includes: a compression roll in which a heat transfer fluid flow path is formed and that compresses an electrode plate for battery use; and a temperature control device that is connected to the heat transfer fluid flow path via a pipe and that controls a temperature of the compression roll by allowing a heat transfer fluid whose temperature has been adjusted to flow through to the heat transfer fluid flow path, wherein the temperature control device is configured to adjust the temperature of the heat transfer fluid such that a difference between the temperature of the compression roll and an electrode plate temperature becomes less than or equal to a first threshold value, the electrode plate temperature being a temperature of the electrode plate immediately after compression by the compression roll.

### [Advantageous Effects of Invention]

According to the present disclosure, generation of thermal crowns can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic configuration diagram of an example of a compression apparatus according to the present disclosure.
[FIGS. 2A and 2B] FIGS. 2A and 2B are diagrams illustrating a configuration of a compression roll, wherein FIG. 2A is a front view, and FIG. 2B is a cross-sectional view taken along a line B-B.
[FIG. 3] FIG. 3 is a flowchart depicting an example of a method for controlling the temperature of the compression roll.

### [Description of Embodiments]

Embodiments of a compression apparatus according to the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

A compression apparatus according to the present disclosure is an apparatus for compressing an electrode plate for battery use, and includes a compression roll and a temperature control device. Note that the battery includes primary batteries such as a lithium primary battery, and secondary batteries such as alkaline storage batteries (e.g., a nickel-hydrogen battery and a nickelcadmium battery), lithium-ion secondary batteries, lithium-metal secondary batteries, and all-solid-state batteries including a solid-state electrolyte. In the present disclosure, power storage devices (e.g., a lithium-ion capacitor) in which at least one of the positive electrodes and the negative electrode is an electrode that expresses its capacity by the Faraday reaction also belong to the category of the secondary battery.

The compression roll compresses an electrode plate for battery use (hereinafter, also simply referred to as an electrode plate). The electrode plate may have a coated portion, which is a part of a surface a substate (current collector plate) where an active material layer is formed, and a foil exposed portion (uncoated portion), which is another part of the surface of the substrate where the active material layer is not formed. The compression roll may compress the coated portion of the electrode plate. The compression roll may include a pair of rolls placed at a predetermined interval. The compression roll may be configured to compress the uncoated portion of the electrode plate in addition to the coated portion of the electrode plate. Typically, in a case in which an electrode plate including an active material layer formed by intermittently applying a mixture slurry to a substrate is compressed by a compression roll, the uncoated portions of the electrode plate are compressed. In an electrode plate of this type, the coated portions are intermittently formed in the longitudinal direction of the substrate, and the uncoated portions between the adj acent coated portions are compressed by the compression roll.

A heat transfer fluid flow path is formed within the compression roll. The heat transfer fluid flow path is a flow path through which a heat transfer fluid for heating and cooling the compression roll flows. The compression roll may include a roll main body that compresses the electrode plate and a shaft that supports the roll main body. The heat transfer fluid flow path may be formed in each of the roll main body and the shaft. A plurality of heat transfer fluid flow paths may be formed in the roll main body so as to penetrate the roll main body in the axial direction. A plurality of heat transfer fluid flow paths may be formed in the shaft so as to penetrate the shaft in the axial direction. The temperature of the entire compression roll can be approximately equal to the temperature of the heat transfer fluid flowing through the heat transfer fluid flow paths.

The temperature control device is connected to the heat transfer fluid flow path of the compression roll via a pipe. The temperature control device controls the temperature of the compression roll by allowing the heat transfer fluid whose temperature has been adjusted to flow in the heat transfer fluid flow path. The temperature control device may include a heating unit for heating the heat transfer fluid and a cooling unit for cooling the heat transfer fluid. The heating unit may include a resistance heater for heating the heat transfer fluid, for example. The cooling unit may include a refrigerant evaporator for cooling the heat transfer fluid, for example. Further, the temperature control device may include a circulation apparatus (e.g., a pump) for circulating the heat transfer fluid.

The temperature control device is configured to adjust the temperature of the heat transfer fluid such that a difference between the temperature of the compression roll and an electrode plate temperature becomes less than or equal to a first threshold value. Here, the electrode plate temperature is a temperature of the electrode plate immediately after compression by the compression roll. The temperature of the compression roll may be the temperature of the entire compression roll. As the electrode plate temperature, a saturation temperature (hereinafter, also referred to as saturated roll center temperature) may be indirectly used, or the temperature of the electrode plate measured immediately after compression using a temperature sensor of any type may be directly used. Here, the saturation roll center temperature is a temperature (hereinafter, also referred to as roll center temperature) attained in a part of the compression roll that comes into contact with the electrode plate when the electrode plate is compressed for a certain period of time. The first threshold value may be 0.2°C or higher and 0.5°C or lower, for example.

In the compression apparatus having the above-described configuration, the temperature of the compression roll becomes substantially even over the entirety by the heating action or the cooling action of the heat transfer fluid flowing through the heat transfer fluid flow path. Therefore, when viewing the compression roll alone, heat transfer is less likely to occur therein. Besides, since the electrode plate comes into contact with the compression roll, heat exchange between the two (mainly, heat transfer from the electrode plate heated by compression to the compression roll) is also a cause of generation of thermal crowns. However, in the compression apparatus of the present disclosure, since the difference between the temperature of the compression roll and the electrode plate temperature is adjusted to be less than or equal to the first threshold value as described above, heat exchange between the compression roll and the electrode plate is unlikely to occur. Because both heat transfer within the compression roll and thermal transfer between the electrode plate and the compression roll are less likely to occur, the temperature is kept even throughout the compression roll during operation of the compression apparatus. As a result, generation of thermal crowns can be suppressed.

The temperature control device may be configured to adjust the temperature of the heat transfer fluid such that a difference between the electrode plate temperature in the previous compression and the temperature of the compression roll is less than or equal to a second threshold value before a start of compression of the electrode plate by the compression roll. In the above configuration, even immediately after compression of the electrode plate is started, the heat transfer between the compression roll and the electrode plate can be suppressed to achieve suppression of generation of thermal crowns. Note that the previous compression refers to compression performed on either the same electrode plate or an electrode plate of the same type (or an electrode plate exhibiting a similar heating behavior) as the one to be compressed. The second threshold value may be 0.2°C or higher and 0.5°C or lower, for example. The second threshold value may be equal to or different from the first threshold value.

The temperature control device may be configured to adjust the temperature of the heat transfer fluid to a first target temperature when a difference (hereinafter, also referred to as temperature deviation) between a roll center temperature, which is a temperature of a part of the compression roll that comes into contact with the electrode plate, and the first target temperature is less than or equal to the first threshold value, and adjust the temperature of the heat transfer fluid to a second target temperature when the difference (temperature deviation) between the roll center temperature and the first target temperature exceeds the first threshold value. Here, the second target temperature is a temperature obtained by adding the difference (temperature deviation) between the roll center temperature and the first target temperature to the first target temperature. In the former situation, generation of thermal crowns can be sufficiently suppressed by the heat transfer fluid whose temperature has been adjusted to the first target temperature. This is because heat transfer between the electrode plate and the compression roll is suppressed when a difference between the roll center temperature (temperature very close to the temperature of the electrode plate during compression or immediately after compression) and the temperature of the heat transfer fluid (temperature very close to the temperature of the entire compression roll) is small. In the latter situation by contrast, generation of thermal crowns may not be sufficiently suppressed by the heat transfer fluid whose temperature has been adjusted to the first target temperature. This is because when the difference between the roll center temperature and the temperature of the heat transfer fluid is large, heat transfer occurs between the electrode plate and the compression roll to generate an unignorable temperature gradient within the compression roll. In view of the foregoing, the above configuration reduces the temperature gradient within the compression roll in the latter situation in a manner that the difference between the roll center temperature and the temperature of the heat transfer fluid is reduced by adjusting the temperature of the heat transfer fluid to the second target temperature that is obtained by adding the temperature deviation to the first target temperature. Thus, generation of thermal crowns can be sufficiently suppressed.

According to the present disclosure, generation of thermal crowns can be suppressed by suppressing both heat transfer within the compression roll and heat transfer between the compression roll and the electrode plate as described above.

Hereinafter, an example of the compression apparatus according to the present disclosure will be described in detail with reference to the drawings. The elements of configuration described above are applicable to elements of configuration of the exemplary compression apparatus described below. The elements of configuration of the exemplary compression apparatus described below can be altered based on the above description. Further, the matters described below may be applied to the above-described embodiment. Among the elements of configuration of the exemplary compression apparatus described below, an element of configuration that is not essential to the compression apparatus according to the present disclosure may be omitted. It should be noted that the drawings indicated below are schematic and do not accurately reflect the shape or number of actual members.

A compression apparatus 10 of the present embodiment is an apparatus for compressing an electrode plate 100 for battery (e.g., a lithium-ion secondary battery) use (hereinafter, also simply referred to electrode plate 100). Although not illustrated, the electrode plate 100 has a coated portion, which is a part of a surface of a substate (current collector) where an active material layer is formed, and a foil exposed portion (uncoated portion), which is another part of the surface of the substrate where the active material layer is not formed.

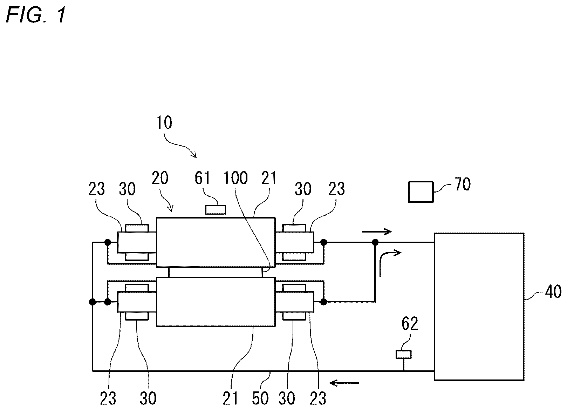

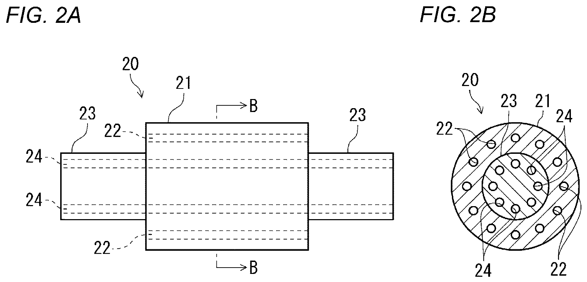

As illustrated in FIGS. 1 and 2, the compression apparatus 10 includes compression rolls 20, a plurality of bearings 30, a temperature control device 40, a first temperature sensor 61, a second temperature sensor 62, and a control unit 70.

The compression rolls 20 include a pair of rolls between which the electrode plate 100 for battery use (specifically, the coated portion of the electrode plate 100) is compressed. Each compression roll 20 includes a roll main body 21 that compresses the electrode plate 100, and a shaft 23 that supports the roll main body 21. A plurality of (in this example, eight) first heat transfer fluid flow paths 22 are formed in the roll main body 21 so as to penetrate the roll main body in the axial direction. The plurality of first heat transfer fluid flow paths 22 are arranged at equal intervals in the circumferential direction of the roll main body 21. In the shaft 23, a plurality of (twelve in this example) second heat transfer fluid flow paths 24 are formed so as to penetrate the shaft 23 in the axial direction. The plurality of second heat transfer fluid flow paths 24 are arranged at equal intervals in the circumferential direction of the shaft 23. The first heat transfer fluid flow paths 22 and the second heat transfer fluid flow paths 24 each are an example of a heat transfer fluid flow path.

The plurality (in this example, four) of bearings 30 rotatably support the shaft 23 of the compression roll 20. Each of the bearings 30 may be a circulating oil supply type rolling bearing, for example.

The temperature control device 40 is connected to the first heat transfer fluid flow paths 22 and the second heat transfer fluid flow paths 24 via a pipe 50. The temperature control device 40 controls the temperature of the compression roll 20 by allowing the heat transfer fluid whose temperature has been adjusted to flow through the first heat transfer fluid flow paths 22 and the second heat transfer fluid flow paths 24. Specifically, the temperature control device 40 is configured to adjust the temperature of the heat transfer fluid such that a difference between the temperature of the compression roll 20 and the electrode plate temperature becomes lower than or equal to the first threshold value. Here, the electrode plate temperature is a temperature of the electrode plate 100 immediately after compression by the compression roll 20.

The first temperature sensor 61 detects the temperature (hereinafter, also referred to as roll center temperature) of a part of the compression roll 20 that comes into contact with the electrode plate 100. The first temperature sensor 61 preferably detects the surface temperature at the axial center of the compression roll 20 as the roll center temperature. The first temperature sensor 61 may be a non-contact temperature sensor or a contact temperature sensor. Data of the roll center temperature detected by the first temperature sensor 61 is sent to the control unit 70.

The second temperature sensor 62 detects the temperature (hereinafter, also referred to as outflow temperature) of the heat transfer fluid flowing out of the temperature control device 40. The second temperature sensor 62 may detect the temperature of a part of the pipe 50 located near the outlet of the temperature control device 40 as the outflow temperature. The second temperature sensor 62 may be a contact temperature sensor or a non-contact temperature sensor. The data of the outflow temperature detected by the second temperature sensor 62 is sent to the control unit 70. Note that the second temperature sensor 62 may detect the temperature of the heat transfer fluid flowing into the temperature control device 40 or may detect the temperature of the heat transfer fluid at any point of any of the heat transfer fluid flow paths.

The control unit 70 controls the operation of each component of the compression apparatus 10. For example, the control unit 70 controls the operation of the temperature control device 40 based on the data sent from the first temperature sensor 61 and the second temperature sensor 62. The control unit 70 includes an arithmetic device and a storage device that stores therein programs executable by the arithmetic device. The storage device stores therein information about the electrode plate temperature. In the present embodiment, the saturation value (saturation roll center temperature) of the roll center temperature detected by the first temperature sensor 61 is approximately used as the electrode plate temperature.

The temperature control device 40 adjusts the temperature of the heat transfer fluid before a start of compression of the electrode plate 100 by the compression roll 20 such that a difference between the electrode plate temperature in the previous compression and the temperature of the compression roll 20 becomes less than or equal to a second threshold value. Further, the temperature control device 40 is configured to adjust the temperature of the heat transfer fluid to a first target temperature when a difference between the roll center temperature and the first target temperature is less than or equal to the first threshold value, and adjust the temperature of the heat transfer fluid to a second target temperature when the difference between the roll center temperature and the first target temperature exceeds the first threshold value. Here, the second target temperature is a temperature obtained by adding the difference (which can be either a positive value and a negative value) between the roll center temperature and the first target temperature to the first target temperature.

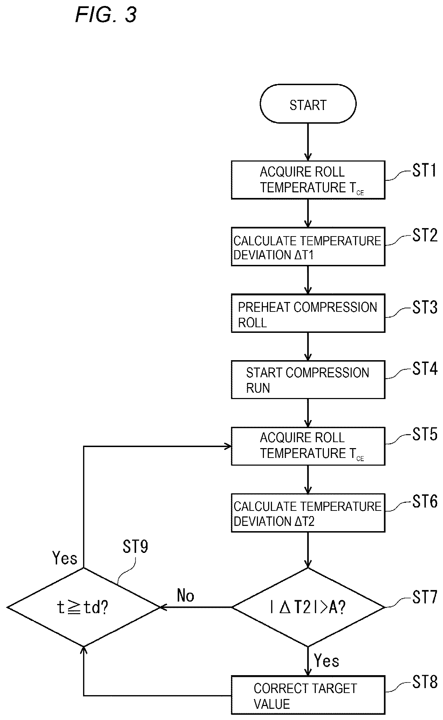

Next, an example of a method of controlling the temperature of the compression roll 20 will be described with reference to FIG. 3.

First at Step ST1, the control unit 70 acquires a roll center temperature T_{CE}. The roll center temperature T_{CE} ca be obtained using the first temperature sensor 61. Subsequently, the process proceeds to Step ST2.

At Step ST2, the control unit 70 calculates a first temperature deviation ΔT1. The first temperature deviation ΔT1 is a difference (ΔT1 = T_{CE} - Tₜ₁) between the roll center temperature T_{CE} and a first target temperature Tₜ₁. The first target temperature Tₜ₁ is used as a target temperature of the heat transfer fluid flowing through the first heat transfer fluid flow paths 22 and the second heat transfer fluid flow paths 24. The first target temperature T₁₁ may be the electrode plate temperature in the previous compaction. Subsequently, the process proceeds to Step ST3.

At Step ST3, the control unit 70 preheats the compression roll 20 using the temperature control device 40 such that a difference between the temperature of the compression roll 20 and the first target temperature Tₜ₁ becomes less than or equal to a second threshold value α. Specifically, the control unit 70 adjusts the temperature of the heat transfer fluid to the first target temperature Tₜ₁ using the temperature control device 40 to adjust the absolute value of the first temperature deviation ΔT1 to be smaller than the second threshold value α. Here, the second threshold value α may be 0.2°C or higher and 0.5°C or lower. Subsequently, the process proceeds to Step ST4.

At Step ST4, the control unit 70 starts compression run. Specifically, the control unit rotates the compression roll 20, thereby starting compression of the electrode plate 100. Subsequently, the process proceeds to Step ST5.

At Step ST5, the control unit 70 acquires a roll center temperature T_{CE}. The roll center temperature T_{CE} can be obtained using the first temperature sensor 61. Further, the control unit 70 after acquiring the roll center temperature T_{CE} starts a temperature acquisition timer that measures elapsed time. Subsequently, the process proceeds to step ST6.

At Step ST6, the control unit 70 calculates a second temperature deviation ΔT2. The second temperature deviation ΔT2 is a difference (ΔT2 = T_{CE} - Tₜ₁) between the roll center temperature T_{CE} and the first target temperature Tₜ₁. Subsequently, the process proceeds to Step ST7.

At Step ST7, the control unit 70 determines whether or not the absolute value of the second temperature deviation ΔT2 is greater than a first threshold value A. If the absolute value is greater than the first threshold value A, the process proceeds to Step ST8. If the absolute value is less than or equal to the first threshold value A by contrast, the process proceeds to Step ST9. When the absolute value is less than or equal to the first threshold value A, the control unit 70 controls the temperature control device 40 such that the temperature of the heat transfer fluid becomes the first target temperature Tₜ₁.

At Step ST8, the control unit 70 performs target value correction. Specifically, the control unit 70 corrects the target temperature of the heat transfer fluid, which is to be allowed to flow in the first heat transfer fluid flow paths 22 and the second heat transfer fluid flow paths 24, from the first target temperature Tₜ₁ to a second target temperature Tₜ₂ (Tₜ₂ = Tₜ₁ + ΔT2) that is obtained by adding the second temperature deviation ΔT2 thereto. In this case, the control unit 70 controls the temperature control device 40 such that the temperature of the heat transfer fluid becomes the second target temperature Tₜ₂. Subsequently, the process proceeds to step ST9.

At Step ST9, the control unit 70 waits until the next temperature acquisition timing. Specifically, the control unit 70 waits until a measurement value t of the temperature acquisition timer having started at Step ST5 becomes greater than or equal to a predetermined time threshold td, and the process returns to Step ST5 when the condition of t≥td is satisfied. The time threshold td may be 0.5 minutes or more and 10 minutes or less, for example. Thereafter, Step ST5 to Step ST9 are repeated.

### <<Supplementary Remarks>>

According to the above description of the embodiment, the following techniques are disclosed.

### (Technique 1)

A compression apparatus including:
a compression roll in which a heat transfer fluid flow path is formed and that compresses an electrode plate for battery use; and
a temperature control device that is connected to the heat transfer fluid flow path via a pipe and that controls a temperature of the compression roll by allowing a heat transfer fluid whose temperature has been adjusted to flow through to the heat transfer fluid flow path, wherein
the temperature control device is configured to adjust the temperature of the heat transfer fluid such that a difference between the temperature of the compression roll and an electrode plate temperature becomes less than or equal to a first threshold value, the electrode plate temperature being a temperature of the electrode plate immediately after compression by the compression roll.

### (Technique 2)

The compression apparatus according to Technique 1, wherein the temperature control device is configured to adjust the temperature of the heat transfer fluid before a start of compression of the electrode plate by the compression roll such that a difference between an electrode plate temperature in previous compression and the temperature of the compression roll becomes less than or equal to a second threshold value.

### (Technique 3)

The compression apparatus according to Technique 1 or 2, wherein
the temperature control device is configured to:
adjust the temperature of the heat transfer fluid to a first target temperature when a difference between a roll center temperature and the first target temperature is less than or equal to the first threshold value, the roll center temperature being a temperature of a part of the compression roll that comes into contact with the electrode plate; and
adjust the temperature of the heat transfer fluid to a second target temperature when the difference between the roll center temperature and the first target temperature exceeds the first threshold value, the second target temperature being a temperature obtained by adding the difference between the roll center temperature and the first target temperature to the first target temperature.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be used for compression apparatuses.

### [Reference Signs List]

10: Compression apparatus
   20: Compression roll
   21: Roll main body
      22: First heat transfer fluid flow path (heat transfer fluid flow path)
   23: Shaft
   24: Second heat transfer fluid flow path (heat transfer fluid flow path)
30: Bearing
40: Temperature control device
50: Pipe
61: First temperature sensor
62: Second temperature sensor
70: Control unit
100: Electrode plate

## Claims

1. A compression apparatus comprising:
a compression roll in which a heat transfer fluid flow path is formed and that compresses an electrode plate for battery use; and
a temperature control device that is connected to the heat transfer fluid flow path via a pipe and that controls a temperature of the compression roll by allowing a heat transfer fluid whose temperature has been adjusted to flow through to the heat transfer fluid flow path, wherein
the temperature control device is configured to adjust the temperature of the heat transfer fluid such that a difference between the temperature of the compression roll and an electrode plate temperature becomes less than or equal to a first threshold value, the electrode plate temperature being a temperature of the electrode plate immediately after compression by the compression roll.

2. The compression apparatus according to claim 1, wherein
the temperature control device is configured to adjust the temperature of the heat transfer fluid before a start of compression of the electrode plate by the compression roll such that a difference between an electrode plate temperature in previous compression and the temperature of the compression roll becomes less than or equal to a second threshold value.

3. The compression apparatus according to claim 1 or 2, wherein
the temperature control device is configured to:
adjust the temperature of the heat transfer fluid to a first target temperature when a difference between a roll center temperature and the first target temperature is less than or equal to the first threshold value, the roll center temperature being a temperature of a part of the compression roll that comes into contact with the electrode plate; and
adjust the temperature of the heat transfer fluid to a second target temperature when the difference between the roll center temperature and the first target temperature exceeds the first threshold value, the second target temperature being a temperature obtained by adding the difference between the roll center temperature and the first target temperature to the first target temperature.
